# EUROPEAN PATENT SPECIFICATION

(11) **EP 4 317 035 B1**
(45) Date of publication and mention of the grant of the patent: **25.02.2026**
(21) Application number: 23185390.4
(22) Date of filing: 13.07.2023
(51) Int. Cl.: B65G 47/91, B25J 15/06

(54) **FLEXIBLE SUCTION TOOL FOR A GRABBING APPARATUS**
FLEXIBLES SAUGWERKZEUG FÜR EINE GREIFVORRICHTUNG
OUTIL D'ASPIRATION FLEXIBLE POUR UN APPAREIL DE PRÉHENSION

(30) Priority: 13.07.2022 US 202217863597
(43) Date of publication of application: 07.02.2024
(73) Proprietor: Industries Machinex, Plessisville, QC G6L 3G9 (CA)
(72) Inventor: MASSÉ, Marc, Princeville, G6L 4G3 (CA)
(74) Representative: Jacob, Reuben Ellis

(56) References cited:
- EP-A1- 4 265 379
- DE-A1- 102015 009 998
- JP-A- 2016 124 066
- US-A- 3 656 794

## Description

### CROSS-REFERENCE TO RELATED APPLICATIONS

This application claims priority from part of US 17/863,597 filed July 13, 2022.

### FIELD

The subject matter disclosed generally relates to a sorting system for sorting materials, such as recyclable materials or construction materials. More specifically, it relates to a suction tool for a vacuum apparatus for selective handling in a sorting system.

### RELATED PRIOR ART

There are various systems designed for sorting materials, such as in the recycling industry. The sorting can be done in an automatic manner using optical means for recognizing particular types of objects on a conveyor, and using a handling tool to grab objects to be sorted.

Heterogeneity of the materials on the conveyor, both in terms of size and nature of the materials, makes the handling a difficult task. Performing this task further involves temporary stocking of such heterogenous materials, which is hard to manage in the industrial workflow. Improvements in the sorting systems need to address these issues.

In particular, the part of a system for sorting materials which grabs objects should be improved for greater efficiency in grabbing objects as well as facilitated maintenance and higher durability.

Prior art systems also notably use air-sucking systems which have small openings at the surface of contact with objects to be handled on a conveyor, for example of a diameter which is smaller than 19.05 mm (0.75"), to avoid sucking up objects and ensure that th objects are properly handled on the conveyor without being sucked by accident inside the tubing of the air-sucking system. A prior art system which discloses the features of the preamble of claim 1 is known from US 3 656 794 A.

### SUMMARY

According to the invention. there is provided a suction tool for a system for sorting materials with a vacuum tube, the suction tool comprising: a body of flexible material to be installed at a distal end of the vacuum tube and forming a hollow, tubular wall, the tubular wall being shaped with a succession of alternating rims and waists, wherein the succession of alternating rims and waists has an average diameter of the body distally decreasing over a length of the body of flexible material, thereby narrowing from a proximal end of the suction tool to a distal end thereof.

According to an embodiment, the tubular wall has a distal end which is open, the tubular wall being upwardly collapsible upon the distal end thereof being blocked by an object, for self-retractation of the tubular wall when connected with the vacuum tube being in operation.

According to an embodiment, each rim has a local rim diameter larger than a local waist diameter of a next adjacent one of the waists, in a distal direction.

According to an embodiment, each rim has a local rim diameter larger than a local waist diameter of a next adjacent one of the waists, in the distal direction, by a difference between about 19.05 mm (0.75") and about 27.94 mm (1.1").

According to an embodiment, the average diameter distally decreasing over the length of the body of flexible material is implemented by having each rim having said local rim diameter smaller than the local rim diameter of a next one of the rims; each waist having said local waist diameter larger than the local waist diameter of a next one of the waists, in the distal direction.

According to an embodiment, the rim of each stage has said diameter between about 0.62 mm (0.30") and about 11.43 mm (0.45") larger than the diameter of the rim of a next one of the stages, a smallest one of the rims being between about 71.12 mm (2.8") and about 76.2 mm (3.0") in diameter.

According to an embodiment, each waist has said local waist diameter between about 3.81 mm (0.15") and about 6.86 mm (0.27") larger than the local waist diameter of a next one of the waists, a smallest one of the local waist diameter being between about 25.4 mm (1.0") and about 50.8 mm (2.0").

According to the invention, the body ends at the distal end with a horn having a bell flare shape, an edge thereof forming a lip to enter in contact with items to be handled by the system for sorting materials.

According to an embodiment, the body is integrally made of a single piece.

According to an embodiment, the body is made of rubber.

According to an embodiment, the body is made of neoprene.

According to an embodiment, the body has a Shore A hardness between about 35 and about 60.

### BRIEF DESCRIPTION OF THE DRAWINGS

Further features and advantages of the present disclosure will become apparent from the following detailed description, taken in combination with the appended drawings, in which:
Fig. 1 is a perspective view illustrating an apparatus for sorting materials;
Fig. 2 is a perspective view illustrating a sorting device in the apparatus for sorting materials;
Fig. 3 is a perspective view illustrating a cyclonic decanter for the apparatus for sorting materials;
Fig. 4 is a flowchart illustrating the components of the system for sorting materials;
Fig. 5A is a schematic diagram illustrating the system for sorting materials; Fig. 5B is a schematic diagram illustrating the system according to a further example;
Fig. 6 is a flowchart illustrating a method for sorting materials;
Fig. 7 is a perspective view illustrating an apparatus for sorting materials;
Figs. 8A-8D are a side contextual view, a perspective view, a cross-section and another perspective view illustrating a suction tool for an apparatus for sorting materials;
Figs. 9A-9B are a perspective view and a cross-section illustrating a suction tool for an apparatus for sorting materials, according to an embodiment of the invention;
Figs. 10A-10B are side views illustrating a flexible body of the suction tool of Fig. 9A; and
Fig. 11 is a perspective view illustrating the suction tool as in Fig. 9A.

It will be noted that throughout the appended drawings, like features are identified by like reference numerals.

### DETAILED DESCRIPTION

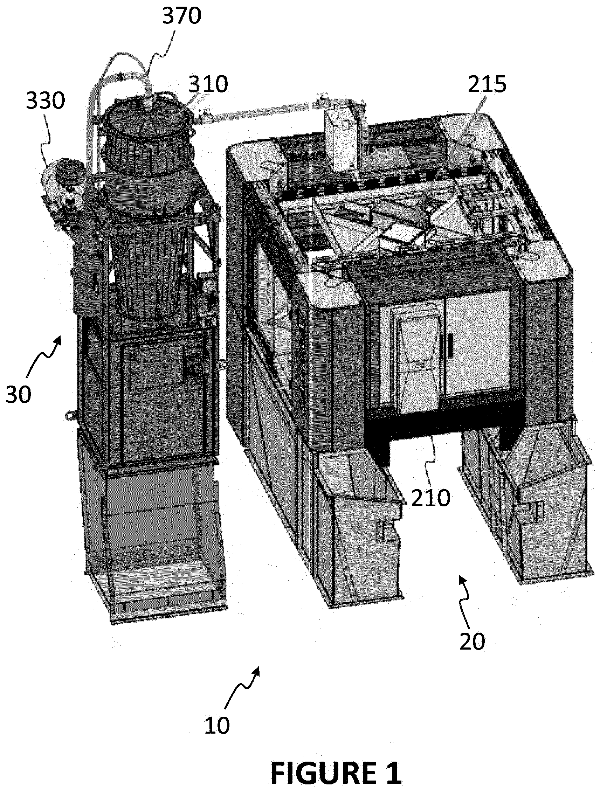

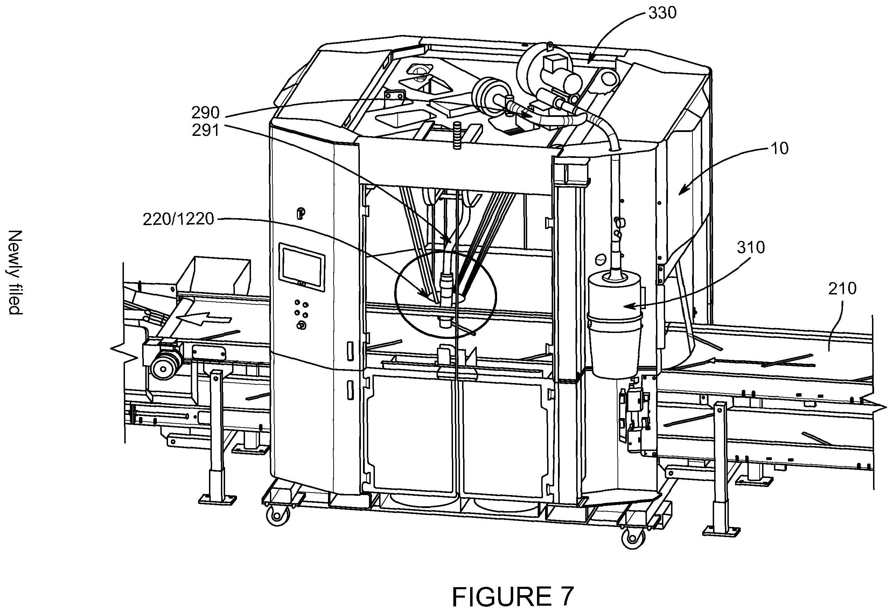

Referring to Fig. 1 or Fig. 7, there is shown a system **10** for sorting materials undergoing a movement, such as on a running conveyor. The system **10** comprises a sorting apparatus **20** and a vacuum apparatus **30** in combination therewith. The sorting apparatus **20** comprises a conveyor **210** on which the materials (comprising individual items to be sorted) are transported, or any other mechanism by which the materials to be sorted are being moved for the purpose of performing selective picking during said movement, the movement permitting a high frequency for this selective picking. The sorting apparatus **20** is adapted to perform real-time identification of the items transported thereon in view of the selective picking.

A handling tool **220,** or head, is provided and is used to grab and handle selected large items on the conveyor **210,** or alternatively to suck up selected small items away from the conveyor **210,** depending on a real-time identification made immediately before the grabbing or the sucking action. The handling tool **220** is robotized, so that the handling tool **220** is directed right above the expected location of the selected items on the moving conveyor **210** (or any other moving mechanism), and the handling tool **220** can grab the item for removal from the conveyor **210** and displacement to another location (e.g., into a dedicated container, onto another conveyor, onto a specific location on the floor, etc.).

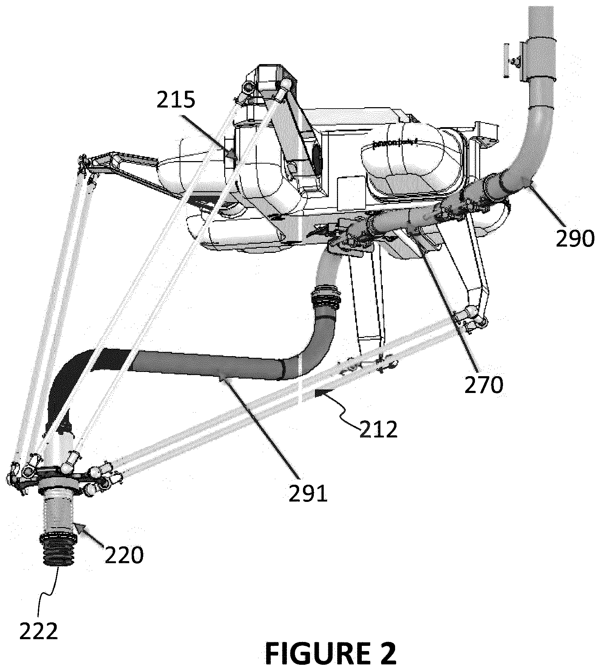

The sorting apparatus **20** comprises a mechanism to displace the handling tool **220** by robotized translation of the handling tool **220** over the conveyor **210,** for example arms **212,** which are shown in Fig. 2. These arms **212** are expected to extend from a gantry or another static location above the conveyor, and are robotized be able to translate the handling tool **220** at the location where the items to be grabbed or sucked up are to be located at the end of the movement of the handling tool **220** (i.e., the time taken for the robotized translation and the movement of the item over the conveyor **210** during this time interval should be taken into account when the robotized movement is instructed). Items are identified using appropriate optical equipment **214,** which can comprise cameras using image recognition, or other tools involving spectrometry (i.e., with a light source where the reflected light is analyzed) and the like to identify the nature of the items to grab or suck up, in particular the nature of the object (to decide whether to act on it or not) and the position where the handling tool **220** should be displaced to act on it. The result is that a given item to remove will be either grabbed or sucked up, depending on its size relative to the diameter of the tubing, or not acted upon depending on the nature of the item, as described further below.

The device which controls the arms **212** and which receives data from the optical equipment **214** is generically called the sorting robot **215,** which can comprise a controller **300** for the system **10,** or be operatively connected to such a controller **300,** which receives and treats data to perform the tasks in the system **10.**

The handling tool **220** comprises a vacuum tube end or suction tool **222** or **1222,** described more specifically further below, formed by a wall with a generally cylindrical or frustoconical shape and additionally shaped with alternating rims (or ridges) and waists, defining a tube with an inside passage therethrough (lumen). Such a vacuum tube end or suction tool **222** for the handling tool **220** is advantageous to provide a double functionality of either grabbing large items by suction, thereby acting like a suction cup, or sucking up small items away to perform vacuum cleaning. It should be noted that an embodiment for the vacuum tube end or suction tool **222** is also described further below. To this end, there is provided a vacuum tubing **290,** which extends from the handling tool **220,** where it has its vacuum entry point, to a decanter **310,** where it has its exit point. The vacuum tubing **290** performs the vacuum cleaning by removal of small items through the tubing, captured by the low pressure which draw them away and moves them through the vacuum tubing **290** toward the source of vacuum, and also performs the static suction by providing a tubing where a vacuum is made when the end (vacuum entry point) is obstructed by the large item to be sucked the large item being statically held there by suction.

In that particular case, the handling tool **220** is well adapted to vacuum clean (i.e., remove) the small items among the materials on the conveyor 210. The implication is that small items can be identified, so that the handling tool **220** is directed (i.e., instructed and moved by the controller) right above the expected location of these items on the moving conveyor **210** (i.e., expected location by the end of the movement of the handling tool **220**), and the vacuum will suck up the small items away from the conveyor **210,** using the vacuum tubing **290,** to remove such small items from the conveyor **210.** The assumption here is that small items usually need to be removed as they are either valuable materials that need to be collected, undesirable debris that need to be removed, or materials that need to be put in a single place for any other reason, whether the materials being sorted are for recycling, construction, or other industrial processes. The expression "small items" may also refer to items which are not necessarily small, but are flexible or deformable such as to be suckable by the tubing. An example of such deformable or flexible items that fit inside the diameter of the tubing **290** can include consumer plastic bags.

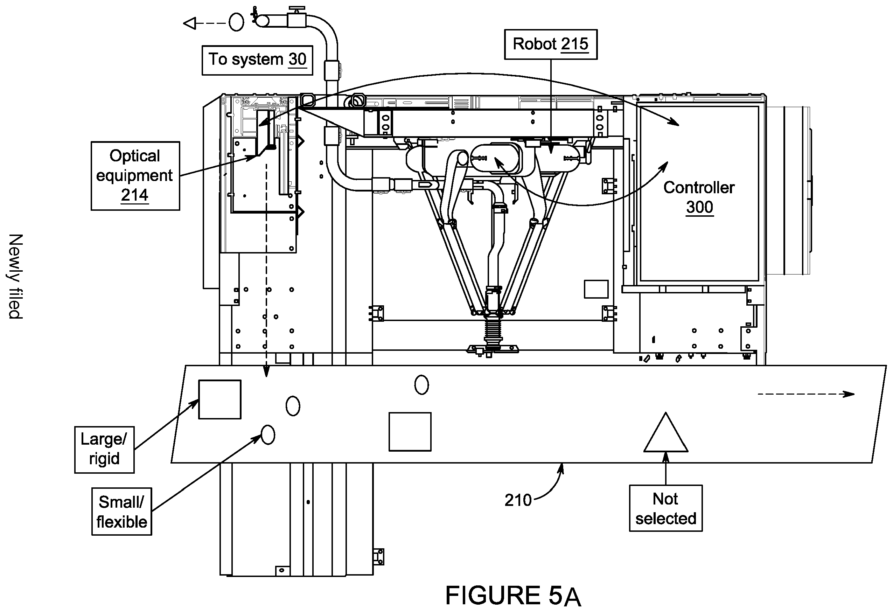

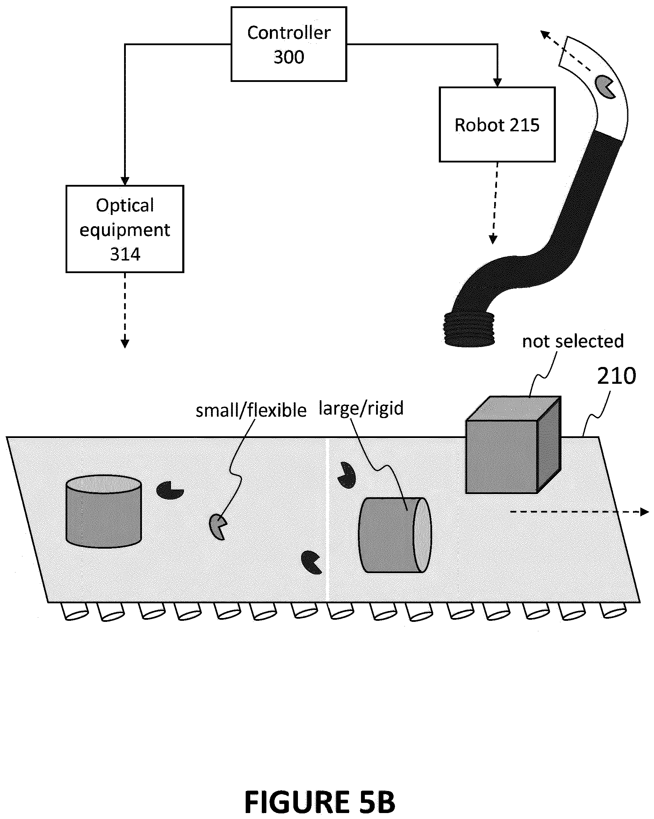

Fig. 5A illustrates the materials on the conveyor **210,** including small and large items with a differentiated treatment (i.e., selective sorting).

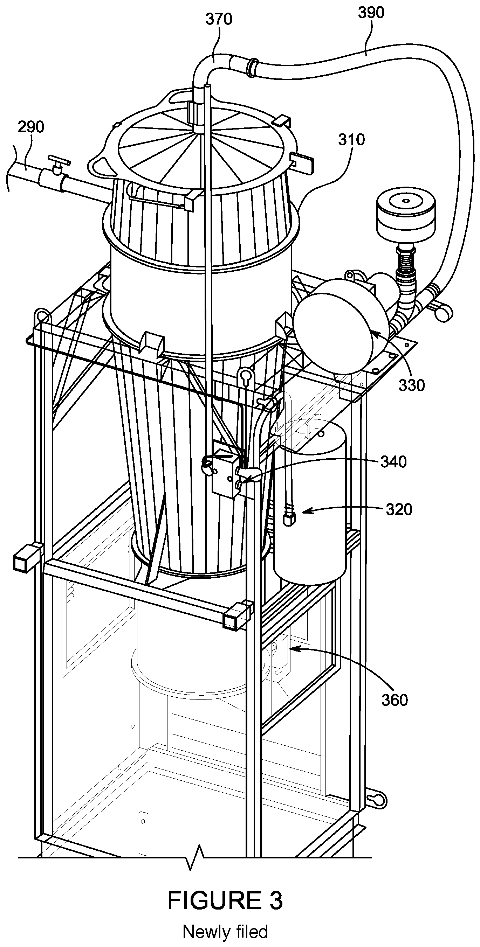

As shown in Fig. 1 and, more clearly, in Fig. 3, the decanter **310** is a cyclonic decanter, which uses a rotary movement of the volume of air containing particles in suspension therein to filter said particles (i.e., the small items) from said volume of air by having them fall down into the container of the decanter **310,** while leaving the cleaned volume of air flow upwardly. The decanter **310,** when embodied as a cyclonic decanter, is typically a single container with an upper portion shaped as a cone in which the entering air flows in a tangential direction along the conical surface to separate particles (which fall down) and air (which flows up). After a continuous use of the system **10,** it should be expected that the decanter **310** fills up with the small items or particles accumulating therein.

Considering that the vacuum tube end **222** is upstream, there is defined another location downstream of the decanter **310,** a vacuum fan motor **330** (at the most downstream location in the path) that creates the necessary depression (pressure gradient) between itself and the decanter. Tubing **390,** extending between the decanter **310** and the vacuum fan motor **330,** connects them to perform the vacuum function by significantly decreasing the pressure in the decanter **310** and by keeping it low during operation. It should however be noted that the vacuum fan motor **330** that creates the necessary depression can be located elsewhere in the system **10,** for example within the tubing **290** (therefore, upstream of the decanter **310** or of any other item depository), as long as the sucked items can keep moving into the tubing **290,** for example using their momentum to keep moving past the vacuum fan motor **330** toward the decanter **310,** or fall within the tubing **290** under the force of gravity for example. Overall, there should be produced a significant air flow in the system **10,** effective at the suction tool **222** or **1222,** which can be used to lift objects for either simple static grabbing or dynamic ingestion of the objects into and through the system 10, despite the suction tool **222** or **1222** not having a perfect adhesion or not well conforming to the surface of the object.

In order to achieve the double function of grabbing large items by static suction at the tube end and sucking up small items through the lumen of the tubing for vacuum cleaning, the depression created by the vacuum fan motor **330** (acting as a source of depression for the vacuum function) should be in the order of 1.02 m (40 inches) of water or above, such as between 1.02 m and 2.03 m (40 and 80 inches) of water, preferably between 1.27 m and 2.03 m (50 and 80 inches) of water, and more preferably about 1.78 m (70 inches) of water. An inch of water is the typical unit measurement in this field and it is equivalent to 248.84 Pa.

The vacuum tube end or suction tool 222 (described in greater detail further below, where an embodiment of a vacuum tube end or suction tool 1222 is also described) is expected to be the end of a tube and therefore is expected to have a substantially circular opening. The diameter of this circular opening should be chosen to fit the desired threshold which defines which items are being grabbed and which items are being sucked up, and therefore depends on the application. Such a diameter can range between 12.7 mm (0.5") to 20.32 mm (0.8") for example about 2". Items larger than this diameter or threshold are expected to be grabbed, while those smaller are expected to be sucked up through the tubing **290,** downstream toward the decanter **310.**

After a significant period of time of operating the system **10,** the decanter **310** will slowly fill up and the system **10** will become less efficient. In a typical work flow, the system **10** would need to be stopped completely to empty the decanter and clean it. This is a normal maintenance task, but it implies stopping the apparatus, which is not efficient.

According to an example, , there is provided a cleaning tool and method of operation thereof which allows emptying and purging the decanter **310** and avoiding turning the system **10** off. A compressed air source **320** is provided. The compressed air source **320** connects to a compressed air injection point **370** in the vacuum tubing **390.**

According to an example, the compressed air injection point **370** is located between the vacuum fan motor **330** and the decanter **310.** The injection point **370** can otherwise be located at other places in the system **10** as long as the result is a significant decrease in the depression that is measured at the vacuum tube end **222.**

According to another example, the injection point **370** can be replaced by a valve that shuts the tubing to effectively cease the depression from reaching the vacuum tube end **222.**

A valve **340** is located between the compressed air source **320** and the compressed air injection point **370** to act as a logical gate which lets compressed air into the tubing **390** to perform the purge. The valve is controlled by a controller **300,** such as the computer controlling the system **10,** which instructs the valve **340** to open when the purge is to be performed.

This purge can be performed periodically according to some rules. For example, it can be performed after a definite period of time operating the system **10,** or after a given number of items sucked up through the handling tool **220,** or after a given volume of material that was sucked up, or after a given height of small items in the decanter **310,** using in each case the appropriate detector.

The injection of compressed air has the effect of counter-balancing the vacuum from the vacuum fan motor **330** to reduce significantly or cancel the pressure gradient between the decanter **310** and the vacuum tube end **222** (or **1222).** Injected compressed air flows toward the vacuum fan motor **330** that created the depression and thereby stops the air flow from flowing toward the decanter **310.** The overall effect in the tubing **290** is to stop the vacuum at the level of the handling tool **220** and to stop inflow of materials into the decanter **310.**

Once the injection has started, the controller **300** can instruct the opening of a trap door **360** below the decanter **310,** or any other suitable means for emptying the decanter **310** by timing this operation with the injection of compressed air (i.e., the opening of the trap is simultaneous with the injection of compressed air which momentarily stops the vacuum mode of operation of the apparatus). This can be performed in a few seconds, for example by maintaining the injection of compressed air in the tubing for a given period of time between 2 and 4 seconds. During this time, the injection of compressed air in the tubing under vacuum operation reduces the pressure gradient, below a threshold where small items cannot be sucked up anymore, and thereby stops the flow of air and small items into the decanter **310.** The injection and its effect is almost instantaneous and this is why the purge can be performed so fast and easily without having to stop and restart the vacuum fan motor **330,** which would take longer to do. Once this is done, the trap is closed again and the purged decanted is ready for operation again. The controller **300** can therefore instructs the valve **340** to close to stop injection of compressed air and restart the normal vacuum mode of the handling tool **220.**

Moreover, this injection of compressed air can advantageously clean the filter at the exit of the tubing / entry of the decanter **310** because the injected compressed air is directed toward the entry of the decanter **310,** that it reaches with high pressure and velocity against the normal flow direction (being normally from the decanter **310** to the vacuum fan motor **330** while the compressed air being injected within the same tubing travels to the decanter **310**) and can perform a mechanical action of cleaning the filter by flowing therethrough in the reverse direction.

In order to actuate the opening of the trap door **360,** there may be provided a pneumatic cylinder, a hydraulic cylinder, or any other type of servomotor which can actuate a hinge or a similar device that opens a door, as instructed by the controller in synchronicity with the injection of compressed air.

This process ensures that the purge of the decanter **310** is performed in about 3 seconds. This procedure is almost seamless and does not hamper the operation of the system **10.**

According to another example, the decanter **310** can be replaced by a chopper-blower to separate the small items, or flexible items (e.g., plastic bags) from the air that has been drawn thereinto.

According to another example, the decanter 310 can be replaced by, or comprise therein, a screw compactor to separate the small items, or flexible items from the air that has been drawn thereinto, or to compact or withdraw materials. An endless screw compactor inside the decanter 310 would therefore act as a purge system therefor, and can be operated continuously to provide a continuous purge.

According to another example, the decanter 310 can have no bottom (i.e., no cyclonic decanter in the system 10) such that the sucked up small items fall onto the floor at a dedicated location. This alternative example removes the requirement of a trap and of the injection of compressed air. In that case, it is likely that the vacuum fan motor **330** that creates the necessary depression will be located upstream of that dedicated location. In this case, as already mentioned above, the sucked items should keep moving into the tubing **290,** for example using their momentum to keep moving past the vacuum fan motor **330** toward their final destination, or fall within the remaining parts of the tubing **290** under the force of gravity for example. This case in which there is no decanter, and having the vacuum fan motor **330** upstream of the final destination of the sucked items, can be referred to as an automatic, continuous purge system. Advantageously, there is no constrained limit on the volume of those items that can be captured (i.e., as large as the facility can allow, but not constrained by a container size).

According to an example, there is provided another injection point **270** closer to the handling tool **220,** i.e., between the handling tool **220** and the decanter **310.** This compressed air, when injected, has the effect of cancelling the depression directly at the level of the handling tool **220.** This is useful to release a large item that was grabbed by the handling tool **220** using suction, the release being performed instantaneously as the compressed air is injected in tubing close to the handling tool.

As mentioned above with respect to the injection point **370,** a valve or any other suitable mechanism that shuts the tubing to effectively cease the depression from reaching the vacuum tube end **222** (or **1222)** can be added between the decanter **310** and the injection point **270,** to reduce flow or, equivalently, pressure at the injection point **270.**

Indeed, when a large item is grabbed by the handling tool **220,** it is not sucked up away through the tubing **290** as described with respect to the small items. It is instead captured, under the effect of static suction provided by the pressure gradient, by the handling tool **220,** which can lift up the item as long as the depression generated by the vacuum fan motor is sufficient for the weight of the large item (and taking into account that the shape of the object may not fit perfectly the vacuum tube end or suction tool **222** or **1222,** as described below, in which case higher pressure gradients may be necessary to keep holding the large item).According to an example, the tubing **290** comprises a flexible portion **291** which can adapt to the robotized movement of the handling tool **220.** Moreover, when a large item is grabbed, a larger depression (i.e., pressure difference) is temporarily created within the tubing **290** as the vacuum fan motor **330** keeps running while there is no more air inflow from the vacuum tube end **222** or **1222,** and the handling tool **220** deforms and contracts on itself, which has the effect of naturally lifting the end of the handling tool **220** and the grabbed item altogether along with the deformation of the handling tool **220** as a consequent result of the pressure gradient buildup following the grabbing action. The handling tool **220** can therefore be provided advantageously with a resilient material forming a bellow, as shown in Fig. 2, or any other shape the deforms such as to be contracted longitudinally. This lift movement brings the grabbed item up, away from the other materials on the conveyor, the handling tool **220** can therefore be translated horizontally to bring the item elsewhere. To release the large item, injection of air in the injection point **270,** for example immediately downstream of the flexible portion **291,** cancels the depression, thereby eliminating the suction by which the item is grabbed and effectively releasing it under gravity. To avoid the whole tubing **290** to undergo deformations, the tubing **290** can be rigid, but for the flexible portion close to the handling tool **220,** and the handling tool **220** should be deformable in longitudinal compression to undergo the contraction movement due to the pressure gradient buildup during grabbing. For a proper lift, the contraction of the bellow at the end of the tubing **290** should be at least as high as the height of the large objects on the conveyor for lateral displacement and release of the object being grabbed,

The depression ranges described above are chosen to be sufficient to provide the necessary suction airflow to be able to grab items which have an irregular surface. For example, items with a large surface are grabbed by having the suction tool **222** or **1222** enter in contact with the surface and form a suction grabber. If the surface is irregular, the contact may not be good, and air may still pass through interstices between the vacuum tube end or suction tool **222/1222** and the item's surface. Having a large depression in the vacuum system **30** ensures that the item will still be grabbed despite the imperfect contact of the vacuum tube end or suction tool **222/1222** with its surface. Otherwise, providing the vacuum tube end or suction tool **222/1222** with a resilient material such as rubber or an equivalent thereof may help in providing an efficient suction cup effect for grabbing.

The injection of compressed air at the injection point **270** further provides a mean for unclogging the tubing, should there be any materials stuck therein, especially close to the handling tool **220,** due to a misclassification of an item as being a small item where it should not have entered the tubing in the first place.

According to an example, the injection points **270** or **370** comprise a specific internal shape of the tubing which ensures that the injection of compressed air is efficient to compensate for the depression and thereby cancel the vacuum. For example, the tube may be shaped as a sequence of two consecutive elbows (e.g., 45° elbows) in the tubing, creating an obstacle for the airflow in the tubing **290** or **390,** with the point of injection **270** or **370** being a nozzle ending at the center of the lumen of the tube between these elbows. This geometry improves the effectiveness of vacuum cancelation, whether for the release of the grabbed item at the handling tool **220** or for purging the decanter **310.**

According to an example, the handling tool **220,** or head, can comprise more than one vacuum tube end or suction tool 222, for example two tube ends, one being for grabbing items and the other being for sucking items away. The tubing **290** can comprise a corresponding number of tubes, or the tube can split to form the more than one vacuum tube end or suction tool **222/1222.** In other words, if the moving the head comprises more than one end, the plurality of ends can have their vacuum generated by the same blower (i.e., the same vacuum fan motor **330**) or by a corresponding plurality of motors, or any combination. The pressure can be set to be the same in all ends of the head, or an be set at different pressures, which would imply a selective removal of small items and grabbing of large items depending on the size and weight, i.e., each tube end does not suck or grab the same things due to different pressures in their tubing (only a large depression can be used on heavier items). The controller **300** may then decide which tube end among the plurality is the most appropriate for a specific sucking or grabbing task to be performed. The robot **215** can move all the tube ends or, alternatively, different robots may be used for the plurality of tube ends.

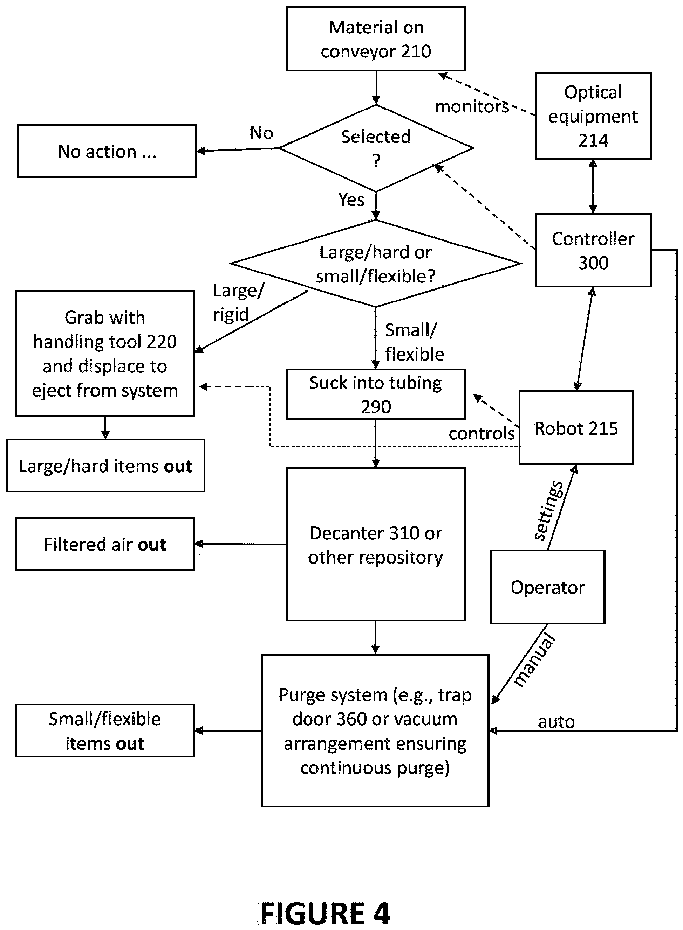

Fig. 4 illustrates that the material on the conveyor **210** are selected or not. Those not selected remain on the conveyor. Those which are selected by the optical equipment **214** are classified as a large or small (or hard or flexible), and are grabbed or sucked accordingly, these operations being controlled by the sorting robot **215.** Sucking small or flexible items (or any other type which fits inside the tubing **290** or deforms to fit thereinto) results in them ending up in the decanter **310** or other free repository, and are purged. The purge can be operated manually by the operator, or automatically by the controller **300.** The purge can involve opening the decanter **310** using a door, or can instead involve having the vacuum fan motor **330** located upstream of the repository of small items such that the vacuum operation on those small items also includes a continuous and automatic purge. The purge system can therefore comprise either the trap door **360** along with the injection point **370** and other associated equipment, or it can relate to the arrangement (vacuum motor fan upstream of the final destination of the small items) that makes possible the continuous purge, or to any other device described herein such as an endless screw or a chopper-blower, for example.

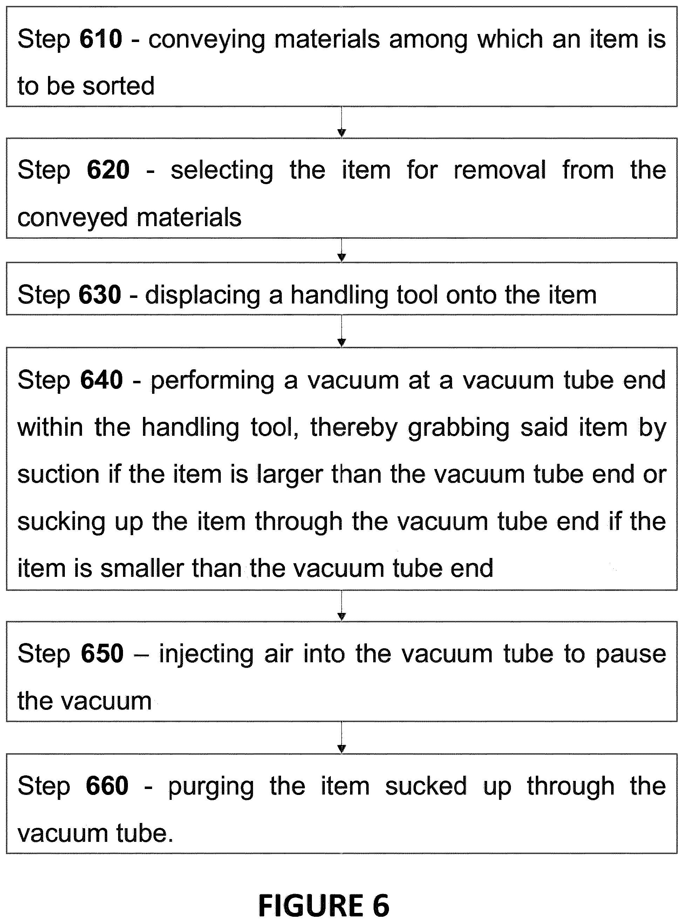

Fig. 6 is a flowchart which summarizes the method for sorting materials and comprises the following steps.
Step **610** - conveying materials among which an item is to be sorted;
Step **620** - selecting the item for removal from the conveyed materials;
Step **630** - displacing a handling tool onto the item;
Step **640** - performing a vacuum at a vacuum tube end within the handling tool, thereby grabbing said item by suction if the item is larger than the vacuum tube end or sucking up the item through the vacuum tube end if the item is smaller than the vacuum tube end;
Step **650** - injecting air into the vacuum tube to pause the vacuum; and
Step **660** - purging the item sucked up through the vacuum tube.

There is now discussed the handling tool **220** in greater detail, including in particular the vacuum tube end or suction tool **222.** The terms the "vacuum tube end" and "suction tool" are used interchangeably, because the vacuum tube end is expected to enter in contact with the objects to grab and thereby act as a grabbing or removal tool using the suction effect resulting from the suction cup design coupled to a source of a partial vacuum.

The handling tool **220,** which grabs or sucks up objects using the suction tool **222/1222,** undergoes significant forces, both in torsion (shearing forces) and in compression. The handling tool **220** may be actuated to grab or suck up an object at a frequency which is expected to be between 60 and 120 occurrences per minute, including a vertical displacement of the handling tool **220,** involving the displacement of the grabbed object, and a mechanical shock resulting from the contact with objects or with the conveyor and with the reaction from the release of said object.

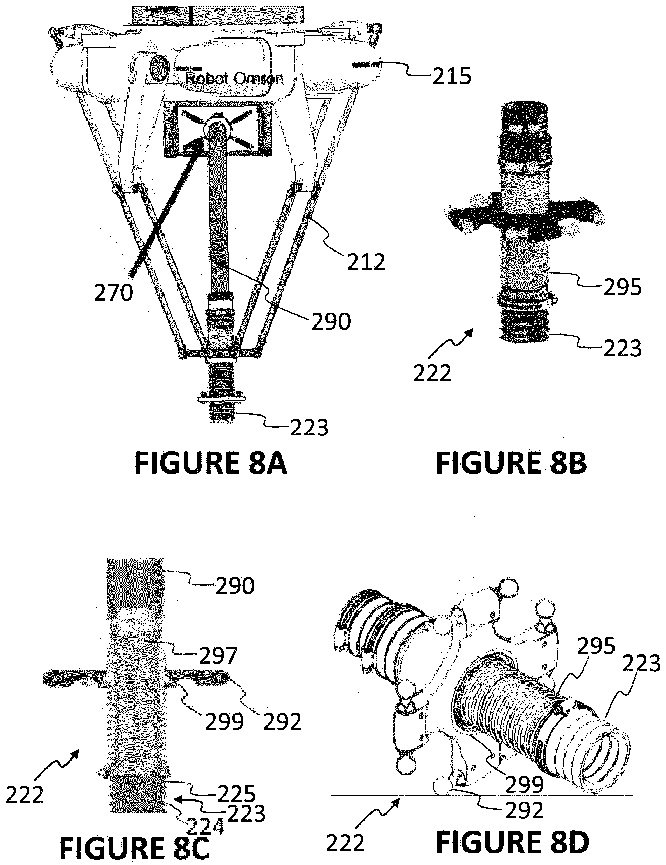

Fig. 8A-8D specifically illustrate the vacuum tube end or suction tool **222** according to a an example not part of the present invention. According to this example of the vacuum tube end or suction tool **222,** the suction tool **222** comprises a flexible body **223,** integrally made of a single piece of material which is flexible, and which is formed of a succession of rims **224** (large or outer diameter, also known as a ridge) and waists **225** (minimum diameter within a tube having a local diameter reduction thereon). Thereby, the flexible body **223** has a shape which is similar to a bellow or accordion, with a succession of partial folds defining the rims (outer or larger diameter) and the waists (inner or smaller diameter). This shape is straight on the outside, i.e., all rims have the same diameter (namely: rim diameter) and all waists have the same diameter (namely: waist diameter), and therefore the flexible body **223** generally has a shape which resembles a cylinder, taking into account the bellow configuration. By definition, the rim diameter is larger than the waist diameter. The shape of the flexible body **223** is made (for example by molding the flexible body **223** during fabrication) to alternately fold inwardly and outwardly at specific locations to define said rims and waists in an alternate fashion.

According to an example, the flexible body **223** is made of an elastomer. According to a more specific example, the flexible body **223** is made of urethane.

The cross-section of the flexible body **223** along a horizontal plane should show that the flexible body **223** is locally a circle. When considered longitudinally, the flexible body **223** is formed of a circle which has a varying diameter alternately ranging from the (maximum) rim diameter and the (minimum) waist diameter, and varying linearly in between.

Folds in the flexible material (at the trim and waist) provide some rigidity to the flexible body, while the flat, inclined planes between the rims and waists, which are technically in the shape of a truncated cone between each rim and adjacent waist, are more flexible. The overall effect is a flexible body **223** having some flexibility and generally maintaining its shape.

As well shown in Fig. 8C, according to an example, the flexible body **223** can have 5 rims, interspaced with 4 waists. The most distal rim can be named as the lip, as it enters in contact with the objects to be grabbed. The thickness of the flexible body **223** can be substantially constant along its length. A small variation in thickness can be expected at the rims and waists, or at the lip.

In order to increase the ability to undergo a vertical translation for the handling tool **220,** as described above, there can be provided a spring connector **295.** The spring connector **295** is a sleeve formed with a spring which can either compress or extend depending on the forces being exerted within the handling tool **220,** i.e., when a large object is being contacted and grabbed, the vacuum is more pronounced, the tubing **290** is induced to retract and the handling tool **220** moves up. This moving up of the handling tool **220** is made more pronounced by having the spring connector **295** be able to compress for additional retraction upwardly.

The most proximal rim of the flexible body **223** can be attached to the spring connector **295,** as shown in Fig. 8C, for example with a collar as shown in Fig. 8B. To implement the ability of the flexible body **223** to retract (translate) with an amplitude greater than that of the tubing **290,** the spring connector **295** should connect between the flexible body **223** and the tubing **290.** A tubing connector **299** is thereby provided, such that the spring connector **295,** at its distal end, connects to the most proximal portion of the flexible body **223** (e.g., most proximal rim) and, at its proximal end, to the tubing connector **299** of the tubing **290.**

In order to ensure that the vacuum effect is well transmitted into the inside (lumen) of the flexible body **223** despite the spring connector **295** between the flexible body **223** and the tubing **290,** an inner vacuum sleeve **297** is provided and acts as a slidable piston. The inner vacuum sleeve **297** is housed within both a distal portion of the tubing **290** (can be inwardly tapered therein) and within the spring connector **295** which surrounds it. The inner vacuum sleeve **297** should therefore start from inside the tubing **290** to act as a mobile, slidable extender for the tubing **290** within the spring connector **295,** and should also reach the flexible body **223** and be secured therewith. In other words, it should connect with a proximal portion of the flexible body **223** to undergo the same level of translation during operation as the flexible body **223.** The inner vacuum sleeve **297** may provide some buffering of the movement of translation to amortize mechanical shocks. For example and without limitation, Figs. 8B and 8C may illustrate different examples. In Fig. 8B, the inner vacuum sleeve **297** may slide within the tubing connector **299,** and the spring **295** can compress while the parts located above the tubing connector **299** can be stationary (not moving). In Fig. 8C, the inner vacuum sleeve **297** may slide within the tubing connector **299,** and the the parts located above the tubing connector **299** can move along with the inner vacuum sleeve **297** (not stationary in this case).

Handles **292** can be added to the tubing connector **299,** as shown in Figs. 8A-8D. In particular, the handles **292** can be used to pivotally attach the distal ends of the arms **212,** which are described above in reference to Fig. 2.

Since the objects on the conveyor often include fine particulate matter, dust and other glass or plastic granules, such matter often gets stuck in small interstices, cracks and other geometrical features of the handling tool 220. A very regular maintenance schedule needs to be observed, especially to avoid any blocking of the sliding parts or translating parts. Also, this configuration with sliding portions in translation with respect to other parts may simply break if the handling tool hits a large object on the conveyor, requiring a costly part replacement as well as downtime for the system 20.

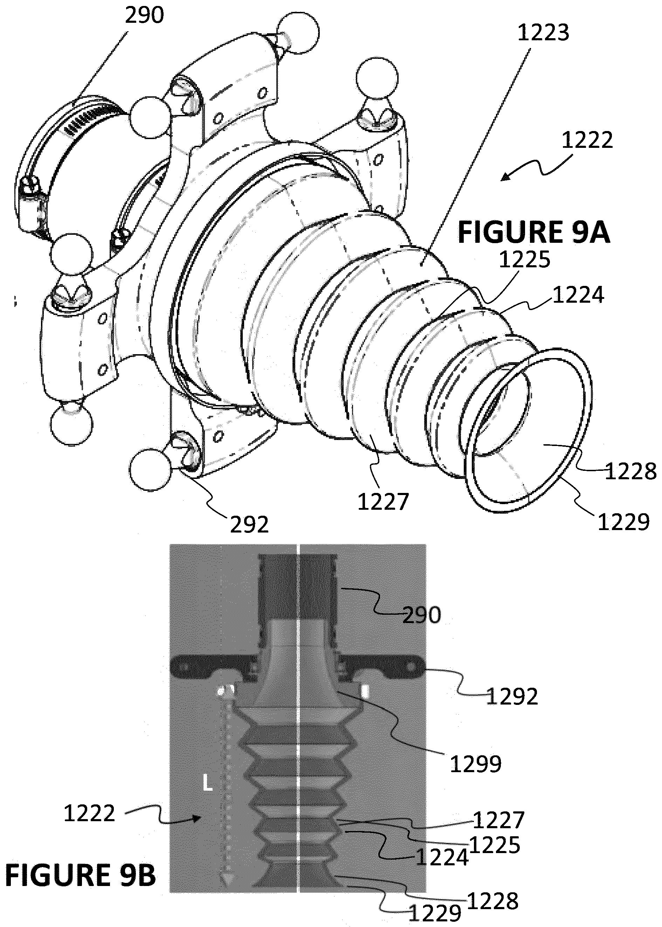

Accordingly, to address these issues, there is presented below an embodiment for the vacuum tube end or suction tool (also referred to as a suction gripper), which can act as an end effector for an articulated robot for handling, gripping or sorting, this suction gripper or suction tool now referred to with the reference number **1222,** as a part of the handling tool **220.** Figs.9A-11 illustrate the vacuum tube end or suction tool **1222** according to this embodiment of the present invention, where the suction tool **1222** is an elongated suction cup having a succession of bellow-like folds (formed of rims and waists, discussed below) of distally narrowing average diameter, plus a horn bell flare-shaped distal end, having a distal end opening for aspiration and located distally of this succession of bellow-like folds of distally narrowing average diameter. The suction tool **1222** is hollow, an inner volume thereof connecting the vacuum tube to the distal end of the suction tool **1222,** which where aspiration or suction gripping takes place.

Using a succession of alternating rims and waists with an average diameter decreasing (i.e., narrowing) in the distal direction, and other adequate geometrical features as described further below, the suction tool **1222** is made self-retractable and is more amply compressible. This can make the suction tool **1222** sufficient for significant depression-induced deformation and retractation (i.e., flexible enough to be upwardly collapsible under internal pressure drop for self-retractation) and thereby lift grabbed objects on the conveyor without the need for other sliding or moving portions in the handling tool **220.** Such a pressure drop occurs when the object is being grabbed and blocks the distal end of the suction tool **1222,** the inner volume of the hollow suction tool **1222** subject to the source of vacuum thereby undergoing a sudden pressure drop. The result is an upward collapse of the hollow suction tool **1222,** which self-retracts upwardly, taking the grabbed object up by mere vertical deformation. This also significantly reduces the movement of the tubing **290** itself and therefor of the arms **212** of the robot, since most of the amplitude of retraction is obtained by the longitudinal deformation of the suction tool **1222** (where said arms **212** can be made of carbon fiber and subject to breaking when undergoing large forces), which implies a lesser frequency and intensity of vibrations on the robot (which needs recalibration when undergoing too much vibration), and greater rapidity.

According to this embodiment of the vacuum tube end or suction tool **1222,** the suction tool **1222** comprises a flexible body **1223,** integrally made of a single piece of material which is flexible, and which is formed of a succession of alternating rims and waists of a decreasing diameter along the length of the flexible body **1223** (tapered shape, or shape of a truncated cone). Thereby, the flexible body **1223** has a shape which is similar to a bellow or accordion, with a succession of partial folds defining the rims (defining the outer diameter, which is a larger diameter than adjacent waist or waists) and the waists (inner diameter, which is a smaller diameter than adjacent rim or rims). This shape is narrowing over a length of the suction tool **1222,** i.e., it is distally decreasing in diameter, or narrowing, or tapered, on the outside, i.e., all rims do not have the same diameter and rather have a specific one (namely: local rim diameter) and all waists do not have the same diameter and rather have a specific one (namely: local waist diameter). Each rim should be adjacent to at least one and at most two waists. By definition, the local rim diameter is larger than any immediately adjacent local waist diameter(s). The shape of the flexible body **1223** is made (for example by molding the flexible body **1223** during fabrication) to alternately fold inwardly and outwardly at specific locations to define said rims and waists in an alternate fashion. In view of the decreasing overall diameter over the length, each local rim diameter is larger than the next local rim diameter; and each local waist diameter is larger than the next local waist diameter, in the distal direction, that is when going further distally toward the bottom, distal end of the suction tool **1222.**

The material chosen to form the flexible body **1123** of the flexible suction tool **1222** should exhibit elastic properties and therefore can be selected to be an elastomer.

According to an embodiment, the flexible body **1123** of the flexible suction tool **1222** is a rubber. According to another embodiment, the flexible body **1123** of the flexible suction tool **1222** is a neoprene. The flexible body **1123** of the flexible suction tool **1222** can be fabricated by molding said rubber, neoprene, or other elastomer, into the shape as described comprises the succession of alternating larger rims and thinner waists following a distally decreasing diameter. The elastomer (rubber, neoprene, or other elastomer) forming the flexible body **1123** of the flexible suction tool **1222** can be selected to have a Shore A hardness between about 35 and about 60, preferably between about 45 and about 55, and more preferable about 50.

The cross-section of the flexible body **1223** along a horizontal plane should show that the flexible body **1223** is locally an ellipse (including the particular case of a circle), or even a rectangle, giving the flexible body **1223** a general shape of a truncated cone (frustoconical shape) or truncated pyramid (frustopyramidal shape) before considering the bellow-like folds which add greater complexity to the exact shape. The frustoconical shape or frustopyramidal shape is used to increase the resistance to shearing forces (flexion) and make displacements more stable. When considered longitudinally, the flexible body **1223** is formed of a circle (or ellipse or rectangle) which has a varying diameter (or the ellipse's great axis or the rectangle's diagonal, not repeated throughout the text to ease reading but considered as an alternative) alternately ranging from the local rim diameter and the local adjacent waist diameter, and varying linearly in between, plus taking into consideration that the rim diameter and the waist diameter which succeed to each other distally (downwardly) are decreasing (i.e., getting smaller) along the length of the flexible body **1223** as the flexible body **1223** extends toward the horn and lip at the bottom distal end.

Bellow-like folds in the flexible material (at the trim and waist) provide some rigidity to the flexible body, while the flat, inclined planes between the rims and waists, which are technically in the shape of a truncated cone between each rim and adjacent waist, are more flexible. The overall effect is a flexible body **1223** having some flexibility and generally maintaining its shape. Also, having the successive rims having their local rim diameter decreasing over the length of the flexible body **1223,** and the successive waists having their local waist diameter decreasing over the length of the flexible body **1223,** ensures that the flexible body **1223** is much more capable of retracting according to its own longitudinal axis when a vacuum is applied therein (i.e., when the lip **1229** of the flexible body **1223** enters in contact with an object to grab it). Also, this greater flexibility reflects not only in the amplitude of retraction, but also in the ability to distort under shearing forces, which is higher in amplitude when compared to the example of the flexible body **223** of Figs. 8A-8D.

As well shown in Fig. C, according to an embodiment of the disclosure, the flexible body **1223** can have 6 rims **1224** (plus a distal horn **1228** ending with a lip **1229** which is analogous to a rim, as described below), interspaced with 5 waists **1225** (or 6 if the distal waist connecting to the horn **1228** is counted). The most distal rim can be named as the lip, as it enters in contact with the objects to be grabbed.

As mentioned above, the distal portion of the flexible body **1223** ends with a distal bell flare or horn **1228** ending with a lip **1229** at the distalmost portion. The distal horn **1228** ending with a lip **1229** can be integral with all other stages forming the single-piece flexible body **1223.** The horn **1228** has a tapered shape with the enlarging portion, or flared portion (bell flare) being directed distally toward the items to be gripped or grabbed, and ending with a lip **1229** which is the most distal rim and which enters in contact with the items to be grabbed. The inner diameter of the horn **1228** is the smallest diameter of the lumen of the flexible body **1223** and is chosen to act as a threshold to limit passage of large items and avoid that they block the tubing **290.** The horn **1228** may have a venturi profile to ensure that the pressure differential is maintained and to aid in keeping the air flow high.

The horn **1228** is flexible enough thanks to it being made of a flexible material and also thanks to its shape of a horn with a naturally flared shape (comparable to the shape of a bell flare of a horn or of a trumpet) which can become even more flared when compressed onto a surface to which it is pressed and onto which it conforms under the atmospheric pressure when a (partial) vacuum is induced therein.

According to an embodiment of the disclosure, the thickness of the flexible body **1223** can be substantially constant along its length. A small variation in thickness can be expected at the rims and waists, or at the lip.

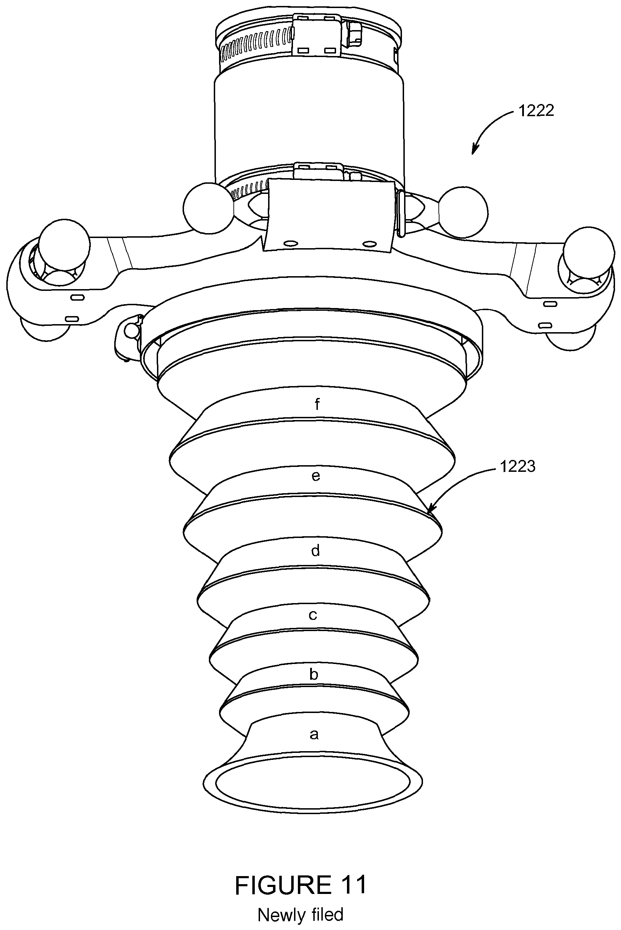

According to another embodiment of the disclosure, and referring to Fig. 11, the thickness of the flexible body **1223** can be variable between each wall portion extending between a rim and a waist. This thickness can be variable between the walls, despite having the flexible body **1223** integrally formed as a single piece of material by molding, as long as the molding can be performed to provide this varying thickness. The thickness can be selected to be preferably thin to avoid unnecessary mass of the flexible body **1223,** taking into account that it needs to be moved very fast and frequently during operation. However, the thickness should be sufficient to provide a minimum level of rigidity such that the flexible body **1223** can generally maintain its shape which gives it adequate mechanical properties.

According to this embodiment of the disclosure, the flexible body **1223** can be divided in stages, comprising the distalmost horn stage (horn **1228** and lip **1229**), labelled as stage a in Fig. 11; and successive stages labelled from b (distal) to f (proximal), each formed by a pair of a rim **1224** and an adjacent waist **1225** and the inclined continuous wall **1227** in between. With this nomenclature, the stage thicknesses can be as follows (in mm (inches)
a. (this stage being the horn) Between about 2.03 mm (0.08") and about 4.57 mm (0.18"); preferably between about 2.54 mm (0.1") and 3.81 mm (0.15"); preferably about 3.302 mm (0.13");
b. About 5.08 mm (0.2") more than a, for example preferably about 3,30 mm (0.13");
c. About the same as b., for example preferably about 3,30 mm (0.13");
d. About 5.08 mm (0.2") more than b or c, for example preferably about 3.81 mm (0.15");
e. About 5.08 mm (0.2") more than d, for example preferably about 4.32 mm (0.17");
f. About 5.08 mm (0.2") more than e, for example preferably about 4.83 mm (0.19");

It will be noted that the thickness is higher in the distal stages, such as in the horn **1228** and the most distal rim and waist, and increases in the proximal direction as the cross-section diameter also increases, toward the proximal direction. The thickness increase for each pair of rim **1224** and waist **1225** (together forming a stage) is about 5.08 mm (0.2") per stage, although adjacent stages may have the same thickness, especially those closest to the horn **1228.**

Such a selection of thickness in the material forming the stages is used to ensure that the lateral displacement of the horn **1228** undergoing an acceleration of 3g would be kept under 2 inches or about 5 centimeters. It also contributes to the ability of the suction tool **1222** to grab and lift objects weighing up to 2.72 kg (6 pounds).

In particular, the thickness of a stage should increase if the cross-section diameter (or diagonal) increases, to maintain the same level of axial rigidity (in the longitudinal axis of the tubular suction tool **1222**) over the stages despite their diameter being larger at the top (proximal stages) than at the bottom (distal stages). Also, the values of the successive local rim diameters and local waist diameters, as well as the height of each stage (all described below), are also selected to ensure that the lateral displacement under significant accelerations and the weight-lifting capacity are among the targets mentioned just above.

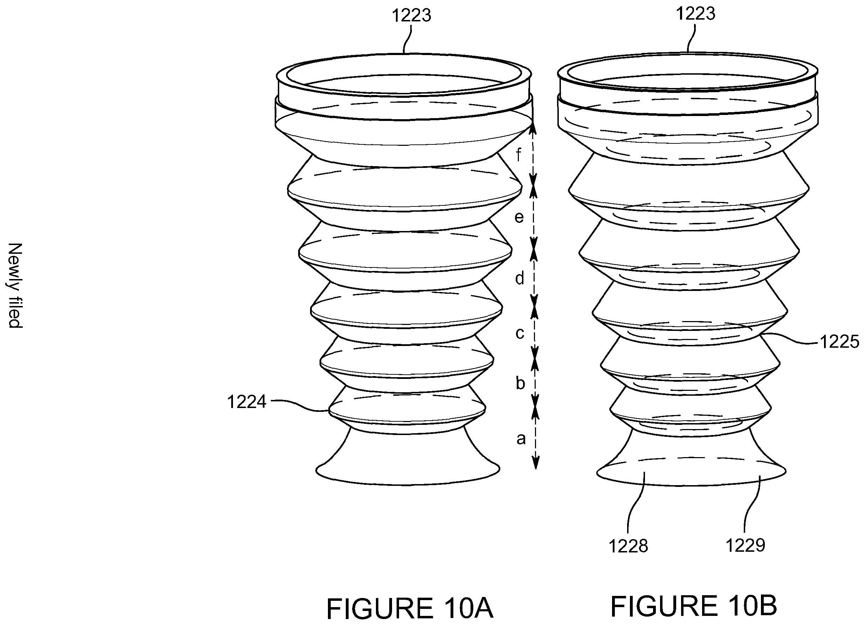

Indeed, referring to Fig. 10B, the local waist diameters of stages *a-f* as mentioned above can be as follows:
a. Between about 45.72 mm (1.8") and about 50.8 mm (2.0"), or between between about 25.4 mm (1.0") and about 50.8 mm (2.0") if using a venturi system allowing smaller diameters; preferably about 48.51 mm (1.91");
b. About 3.81 mm (0.15") more than a, for example preferably about 52.32 mm (2.06")
c. About 6.10 mm (0.24") more than b, for example preferably about 58.42 mm (2.30")
d. About 5.08 mm (0.20") more than c, for example preferably about 63.50 mm (2.50")
e. About 6.19 mm (0.24") more than d, for example preferably about 69.60 mm (2.74")
f. About 6.86 mm (0.27") more than e, for example preferably about 76.45 mm (3.01")

The local waist diameter of the first (most proximal) and smallest waist is chosen to define the width threshold by which items are statically grabbed or dynamically sucked up through the tubing.

Similarly, referring to Fig. 10A, the local rim diameters of stages *a-f* as mentioned above can be as follows:
a. Between about 71.12 mm (2.8") and about 76.2 mm (3.0"), preferably about 74.17 mm (2.92")
b. About 7.62 mm (0.30") more than a, for example preferably about 81.79 mm (3.22")
c. About 8.64 mm (0.34") more than b, for example preferably about 90.42 mm (3.56")
d. About 9.91 mm (0.39") more than c, for example preferably about 100.33 mm (3.95")
e. About 10.41 mm (0.41") more than d, for example preferably about 110.74 mm (4.36")
f. About 11.43 mm (0.45") more than e, for example preferably about 122.17 mm (4.81")

In other words, each rim has said local rim diameter between about 7.62 mm (0.30") and increasing to about 11.43 mm (0.45") larger the local rim diameter of a next one of the rims, a smallest one of the local rim diameter being between about 71.12 mm (2.8") and about 76.2 mm (3.0"). Each waist has said local rim diameter between about 3.81 mm (0.15") and about 6.86 mm (0.27") larger the local waist diameter of a next one of the waists, a smallest one of the local waist diameter being between about 25.4 mm (1.0") and about 50.8 mm (2.0").

Each rim **1124** has a local rim diameter larger than a local waist diameter of a next adjacent one of the waists **1125,** the difference between the local rim diameter and the local waist diameter of the next adjacent one of the waists ranging between 27.94 mm (1.1") in proximal stages and gradually decreasing down to 19.05 mm (0.75") for the distal stages (smallest diameters also have smallest rim/waist difference).

Now referring to the diameter of the horn **1228** and lip **1229,** the smaller, proximal diameter of the horn **1228,** corresponding to a waist, can have a diameter between about 35.56 mm (1.4") and about 55.88 mm (2.2"), for example between about 40.64 mm (1.6") and about 50.8 mm (2.0"), preferably about 45.97 mm (1.81"). Similarly, the larger, distal diameter of the lip of the horn 1229 can have a diameter between about 63,5 mm (2.5") and about 88.9 mm (3.5"), more precisely between about 71.12 mm (2.8") and about 81.28 mm (3.2"), preferably about 75.95 mm (2.99"). Since the horn **1228** is highly flexible, the deformed horn **1228** with a flared lip **1229** is expected to have an effective diameter of suction which is closer to the inner diameter of the horn and thereby closer to the preferred value of inner diameter of about 45.97 mm (1.81"), which is a target value in order to optimize the conformation of the deformed suction tool **1223** during operation with the items being grabbed.

Similarly, referring to Fig. 11, the height of stages *a-f* as mentioned above can be as follows:
a. Between about 17.27 mm (0.68") and about 25.91 mm (1.02"), preferably about 22.35 mm (0.88")
b. About 3.56 mm (0.14") less than a, for example preferably about 18.80 mm (0.74")
c. About 5.33 mm (0.21") more than b, for example preferably about 24.13 mm (0.95")
d. About 2.29 mm (0.09") more than c, for example preferably about 26.42 mm (1.04")
e. About 2.29 mm (0.09") more than d, for example preferably about 28.70 mm (1.13")
f. About 2.79 mm (0.11") more than e, for example preferably about 31.50 mm (1.24")

Having stages with a height which increases if their diameter or diagonal increases ensures that there is kept sufficient rigidity in each stage despite the increasing diameter of the flexible body **1223** of the suction tool **1222.**

More specifically, regardless of the height of a stage, more proximal stages (those located higher) have a larger diameter to increase rigidity of that stage to prevent flexion or shearing of the suction tool **1222** during lateral accelerations (the suction tool **1222** moving sideways and changing directions very fast thus undergoing large accelerations at a high frequency). However, large diameters in a given stage may cause that stage to collapse. Therefore, to avoid this inappropriate mechanical behavior, the stages are designed to have a greater height and a greater wall thickness when their diameter is larger to avoid longitudinal collapsing.

Providing a flexible body **1223** which, on average, decreases in diameter in the distal direction (or equivalently: increases in the proximal direction), with the thickness variations and diameter variations described above, ensures that the flexible body **1223** is able to retract with a significant and sufficient amplitude by itself when contacting an object and undergoing suddenly decreasing pressure (vacuum). Also, the number of stages (rim and waist) is higher than the example of the flexible body **1223** described in reference with Figs. 8A-8D, which helps in giving a higher amplitude of retraction of the flexible body **1223.** The overall length L, as shown in Fig. 9B, between the rigid portion of the tube connector **1299** and the lip **1229** should be between about 5" and about 10", preferably between about 6.5" and about 8.5", preferably about 7.45". This implies that both the spring connector **295** and the inner vacuum sleeve **297** described in reference with Figs. 8A-8D can be avoided. The spring connector **295** is a moving part with a spring which is hard to maintain, subject to high vibrations and repeated deformation which can use prematurely and needs to be replaced, as well as being vulnerable to dust and particulate matter. The inner vacuum sleeve **297** is also a moving part which is inside the apparatus, less accessible while having interstices and joints exposed to dust and particulate matter. The present embodiment described in reference with Figs. 9A-11 can avoid the need to have any of these moving parts vulnerable to wear and, accordingly, are much easier to maintain and more resistant to harsh conditions.

The most proximal rim of the flexible body **1223** can be attached to a tubing connector **1299** which connects to the tubing **290,** thereby providing a more direct connection of the flexible body **1223** to the tubing **290,** since the flexible body **1223** is now designed such that it can undergo by itself a sufficient amplitude of deformation with requiring any other moving part (spring or slidable elements) in between.

In order to ensure that the vacuum effect is well transmitted into the flexible body **223,** the tubing connector **1299** comprises an inside duct to act as an extender between the tubing **290** and the lumen of the flexible body **1223.**

Handles **292** can be added to the tubing connector **1299,** as shown in Figs. 9A-9B and 11. In particular, the handles **292** can be used to pivotally attach the distal ends of the arms **212,** which are described above in reference to Fig. 2.

Advantageously, the suction tool **1222** is flexible enough, thanks to the tapered diameter, frustoconical or frustopyramidal shape underlying the bellow-like folds of the flexible material, to undergo deformations of adequate amplitude which make it auto-retractable This auto-retractability makes the robot able to work at a higher picking frequency, since the trajectory of the tool is optimized and better controlled (also implying less collisions with objects), making the robot more efficient overall for picking. Also, this auto-retractability avoids the use of moving parts (spring, sliding means) and removes joints or interstices between parts, so the removal of mechanical parts and the smaller number of parts implies less maintenance requirements, less downtime due to stuck parts, and less frequently broken parts. The operation is also less noisy when compared to a device having a spring and sliding parts.

In addition to the advantages and constraints mentioned above, the suction tool **1222** should be able to grip or grab an item on the conveyor in a few milliseconds, but less than 10 milliseconds. When an object is gripped or grabbed, the distal end of the suction tool **1222** is blocked, thereby inducing a sudden pressure drop (vacuum) inside the suction tool **1222,** as it is connected to a source of vacuum, which makes the flexible body **1223** deform and, thanks to its advantageous shape described herein, to collapse upwardly and retract (self-retractation) and lift the grabbed object. The amplitude of this vertical self-retraction should be significant but not more than 4 inches to avoid too ample deformations. The suction tool **1222** should be able to withstand dusty environments thanks to the absence of sliding parts and given that most of the mechanical displacement is provided by the longitudinal and also radial deformation of the suction tool **1222** itself. The material used for it should also resist to abrasion and tearing. It should operate in an environment between -20°C and 40°C, and with a degree of moisture of 100% if the items are wet. Within these constraints, thanks to the features discussed above, the suction tool **1222** should have a mechanical availability of about 98% or more.

For example, and without limitation, the sorting apparatus **20** with the suction tool **222** or preferably the suction tool **1222,** can be used to grab items such as HDPE containers, LDPE grocery bags (empty), Tetrapak^{™} containers, milk cartons and other multi-layer food packaging), plastic objects made of PET or PVC, aluminum objects of different shapes, etc.

For example, and without limitation, the sorting apparatus **20** with the suction tool **222** or preferably the suction tool **1222,** can be used in the following applications: Sorting rejects from mixed paper material flow, to evacuate from the flow on the conveyor items such as Tetrapak^{™} containers, PVC, HDPE, PET, aluminum, and all non-mix paper. Other examples can include different combinations of these materials (e.g., sorting PVC by evacuating all other elements, etc.).

## Claims

1. A suction tool (1222) for a system for sorting materials with a vacuum tube, the suction tool comprising:
- a body (1223) of flexible material to be installed at a distal end of the vacuum tube and forming a hollow, tubular wall, the tubular wall being shaped with a succession of alternating rims (1224) and waists (1225),
wherein the succession of alternating rims and waists has an average diameter of the body distally decreasing over a length of the body of flexible material, thereby narrowing from a proximal end of the suction tool to a distal end thereof,
**characterized in that**,
the body ends at the distal end with a horn (1228) having a flared portion having a shape of a bell flare, an edge thereof forming a lip (1229) to enter in contact with items to be handled by the system for sorting materials.

2. The suction tool of claim 1, wherein the tubular wall has a distal end which is open, the tubular wall being upwardly collapsible upon the distal end thereof being blocked by an object, for self-retractation of the tubular wall when connected with the vacuum tube being in operation.

3. The suction tool of claim 1 or 2, wherein each rim has a local rim diameter larger than a local waist diameter of a next adjacent one of the waists, in a distal direction.

4. The suction tool of claim 3, wherein the average diameter distally decreasing over the length of the body of flexible material is implemented by having each rim having said local rim diameter larger than the local rim diameter of a next one of the rims; each waist having said local waist diameter larger than the local waist diameter of a next one of the waists, in the distal direction.

5. The suction tool of claim 1, wherein the body is integrally made of a single piece.

6. The suction tool of claim 5, wherein the body is made of rubber or neoprene, and wherein the body has a Shore A hardness between about 35 and about 60.

## Patentansprüche

1. Saugwerkzeug (1222) für ein System zum Sortieren von Materialien mit einer Vakuumröhre, wobei das Saugwerkzeug Folgendes umfasst:
- einen Körper (1223) aus flexiblem Material, der an einem distalen Ende der Vakuumröhre zu installieren ist und eine hohle, röhrenförmige Wand bildet, wobei die röhrenförmige Wand mit einer Aufeinanderfolge alternierender Wülste (1224) und Einschnürungen (1225) geformt ist,
wobei die Aufeinanderfolge alternierender Wülste und Einschnürungen einen Durchschnittsdurchmesser des Körpers aufweist, der über eine Länge des Körpers aus flexiblem Material distal kleiner wird, wodurch er von einem proximalen Ende des Saugwerkzeugs zu einem distalen Ende davon abnimmt,
**dadurch gekennzeichnet, dass**,
der Körper an dem distalen Ende mit einem Trichter (1228) endet, der einen aufgeweiteten Abschnitt mit einer Form einer glockenförmigen Aufweitung aufweist, wobei eine Kante davon eine Lippe (1229) bildet, um mit von dem System zum Sortieren von Materialien zu handhabenden Gegenständen in Kontakt zu kommen.

2. Saugwerkzeug nach Anspruch 1, wobei die röhrenförmige Wand ein distales Ende, das offen ist, aufweist, wobei die röhrenförmige Wand für eine Selbsteinziehung der röhrenförmigen Wand, wenn sie mit der Vakuumröhre, die in Betrieb ist, verbunden ist, nach oben faltbar ist, wenn das distale Ende davon von einem Objekt blockiert wird.

3. Saugwerkzeug nach Anspruch 1 oder 2, wobei jeder Wulst einen lokalen Wulstdurchmesser, der größer als ein lokaler Einschnürungsdurchmesser einer nächsten benachbarten der Einschnürungen ist, in einer distalen Richtung aufweist.

4. Saugwerkzeug nach Anspruch 3, wobei der Durchschnittsdurchmesser, der über die Länge des Körpers aus flexiblem Material distal kleiner wird, dadurch implementiert wird, dass der lokale Wulstdurchmesser jeder Wulst größer als der lokale Wulstdurchmesser eines nächsten der Wülste ist; wobei der lokale Einschnürungsdurchmesser jeder Einschnürung in der distalen Richtung größer als der lokale Einschnürungsdurchmesser einer nächsten der Einschnürungen ist.

5. Saugwerkzeug nach Anspruch 1, wobei der Körper integral aus einem Stück hergestellt ist.

6. Saugwerkzeug nach Anspruch 5, wobei der Körper aus Gummi oder Neopren hergestellt ist und wobei der Körper eine Shore-A-Härte von zwischen etwa 35 und etwa 60 aufweist.

## Revendications

1. Outil d'aspiration (1222) pour un système de tri de matériaux avec un tube à vide, l'outil d'aspiration comportant :
- un corps (1223) en matériau souple destiné à être installé au niveau d'une extrémité distale du tube à vide et formant une paroi tubulaire creuse, la paroi tubulaire étant façonnée avec une succession de rebords (1224) et de resserrements (1225) alternés,
dans lequel la succession de rebords et de resserrements alternés a un diamètre moyen du corps qui va en diminuant distalement sur une longueur du corps en matériau souple, pour de ce fait aller en se rétrécissant depuis une extrémité proximale de l'outil d'aspiration jusqu'à une extrémité distale de celui-ci,
**caractérisé en ce que**,
le corps se termine au niveau de l'extrémité distale par un cornet (1228) ayant une partie évasée qui a la forme d'un évasement tel une cloche, un bord de celui-ci formant une lèvre (1229) destinée à entrer en contact avec des articles devant être manipulés par le système de tri de matériaux.

2. Outil d'aspiration selon la revendication 1, dans lequel la paroi tubulaire a une extrémité distale qui est ouverte, la paroi tubulaire étant en mesure de se replier vers le haut lorsque l'extrémité distale de celle-ci est bloquée par un objet, à des fins d'auto-rétraction de la paroi tubulaire quand elle est reliée au tube à vide en cours de fonctionnement.

3. Outil d'aspiration selon la revendication 1 ou la revendication 2, dans lequel chaque rebord a un diamètre de rebord local supérieur à un diamètre de resserrement local d'un resserrement adjacent suivant parmi les resserrements, dans une direction distale.

4. Outil d'aspiration selon la revendication 3, dans lequel le diamètre moyen qui va en diminuant distalement sur la longueur du corps en matériau souple est mis en œuvre en faisant en sorte que chaque rebord a ledit diamètre de rebord local supérieur au diamètre de rebord local d'un rebord suivant parmi les rebords ; chaque resserrement ayant ledit diamètre de resserrement local supérieur au diamètre de resserrement local d'un resserrement suivant parmi les resserrement, dans la direction distale.

5. Outil d'aspiration selon la revendication 1, dans lequel le corps est réalisé d'un seul tenant en une seule pièce.

6. Outil d'aspiration selon la revendication 5, dans lequel le corps est réalisé à partir de caoutchouc ou de néoprène, et dans lequel le corps a une dureté Shore A comprise entre environ 35 et environ 60.
